# EUROPEAN PATENT APPLICATION

(11) **EP 3 920 356 A1**
(43) Date of publication of application: **08.12.2021**
(21) Application number: 20177834.7
(22) Date of filing: 02.06.2020
(51) Int. Cl.: H02J 1/10, H02J 7/34, H02J 7/00, B60L 53/50, H02J 13/00

(54) **ELECTRIC VEHICLE CHARGING STATION**

(71) Applicant: ABB Schweiz AG, 5400 Baden (CH)
(72) Inventor: TOMBELLI, Fabio, 2612 AX Delft (NL); LEGA, Marco, 52021 Bucine, Arezzo (IT); BETTI, Giulio, 52048 Monte San Savino (IT); ROMANO, Martino, 52028 Terranuova Bracciolini (Arezzo) (IT); PIETRANTOZZI, Enrico, 05018 Orvieto (IT); ZENG, Lowell-Li, GuangDong 518000 (CN)
(74) Representative: Maiwald Patent- und Rechtsanwaltsgesellschaft mbH

(57) **Abstract**

The present invention is concerned with an electric vehicle charging station (10), comprising an electric power interface (20), configured for receiving electrical power from an electric power source, a plurality of AC-DC-voltage converters (30), electrically supplied by the electric power source (20); wherein each AC-DC-voltage converter (30) comprises an AC-DC-power capability relating to a maximal possible AC-DC-power provided by the AC-DC-voltage converter (30), a plurality of DC-DC-voltage converters (40), electrically supplied by the plurality of AC-DC-voltage converters (30) over at least one DC-bus (50); wherein each DC-DC-voltage converter (40) comprises a DC-DC-power capability relating a possible DC-DC-power provided by the DC-DC-voltage converter (40), a plurality of charging terminals (60), configured for charging an electric vehicle (EV); wherein each DC-DC-voltage converter (40) provides electric power to one charging terminal (60), a control device (70), configured for scheduling the AC-DC-power of the plurality of AC-DC-voltage converters (30) to the plurality of DC-DC-voltage converters (40) based on a managing algorithm, and a communication channel (71), connecting the plurality of AC-DC-voltage converters (30) and the plurality of DC-DC-voltage converters (40) with the control device (70), wherein a sum of the DC-DC-capabilities of the plurality of DC-DC-voltage converters (40) is equal or higher than a sum of the AC-DC-power capabilities of the plurality of AC-DC-voltage converters (30), wherein the control device (70) is configured for determining the AC-DC-power capability of the plurality of AC-DC-voltage converters (30) and an output power, requested by the plurality of charging terminals (60) over the communication channel (71) and wherein the managing algorithm uses the determined AC-DC-power capability and the requested output power.

## Description

### FIELD OF THE INVENTION

The invention relates to an electric vehicle charging station and a method for operating such electric vehicle charging station.

### BACKGROUND OF THE INVENTION

In the standard electric vehicle charging infrastructure, each charger is connected to the AC grid. Based on the power, the low voltage grid can be a dedicated one via a medium voltage substation or the low voltage grid the local grid distributors gives to the end user. The chargers are independent converters and might be equipped with multiple outlets to charge one or more cars in parallel with one or more different protocols. Depending on the charging station use case, a switch matrix might be installed to parallel charger on the same output increasing the outlet capability. When needed, for peak shaving or energy management, the charging station might have a storage system usually coupled directly on the AC grid (same point of connection of the chargers).

The biggest limitation of this architecture is that it does not take into account the load factor of the system. Usually, two conversion stages compose the charger. The first stage is an AC-DC-voltage converter. The second stage is an isolated DC-DC-voltage converter. These two stages are integrated in one power electronics assembly.

Therefore, if the DC-DC-voltage converter is designed for a given power the AC-DC-voltage converter, that is feeding the DC-DC-voltage converter, has to be designed for the same power.

The AC-DC converter's load factor is defined as the ratio between the requested average output power of DC-DC voltage converters and the total output capability of AC-DC-voltage converters. The lower the load factor, the lower the probability that all the chargers are used at the same time at full power.

### DESCRIPTION OF THE INVENTION

It is therefore an objective of the invention to provide an electric vehicle charging station with improved AC-DC converters' load factor. This objective is achieved by an electric vehicle charging station according to the independent claims. Further preferred embodiments are evident from the dependent patent claims.

According to the invention, an electric vehicle charging station comprises an electric power interface, configured for receiving electrical power from an electric power source. The electric vehicle charging station further comprises a plurality of AC-DC-voltage converters, electrically supplied by the electric power source, wherein each AC-DC-voltage converter comprises an AC-DC-power capability relating to a maximal possible AC-DC-power provided by the AC-DC-voltage converter. The electric vehicle charging station further comprises a plurality of DC-DC-voltage converters, electrically supplied by the plurality of AC-DC-voltage converters over at least one DC-bus, wherein each DC-DC-voltage converter comprises a DC-DC-power capability relating a possible DC-DC-power provided by the DC-DC-voltage converter. The electric vehicle charging station further comprises a plurality of charging terminals, configured for charging an electric vehicle, wherein each DC-DC-voltage converter provides electric power to one charging terminal. The electric vehicle charger further comprises a control device, configured for scheduling the AC-DC-power of the plurality of AC-DC-voltage converters to the plurality of DC-DC-voltage converters based on a managing algorithm. The electric vehicle charging station further comprises a communication channel, connecting the plurality of AC-DC-voltage converters and the plurality of DC-DC-voltage converters with the control device. A sum of the DC-DC-capabilities of the plurality of DC-DC-voltage converters is equal or higher than a sum of the AC-DC-power capabilities of the plurality of AC-DC-voltage converters. The control device is configured for determining the AC-DC-power capability of the plurality of AC-DC-voltage converters and an output power, requested by the plurality of charging terminals over the communication channel. The managing algorithm uses the determined AC-DC-power capability and the requested output power.

As the sum of the DC-DC-capabilities of the plurality of DC-DC-voltage converters can be higher than the sum of the AC-DC-power capabilities of the plurality of AC-DC-voltage converters, and since the requested average output power of DC-DC voltage converters is less than the sum of the DC-DC-capabilities of the plurality of DC-DC-voltage converters, the AC-DC converter's load factor can be increased in principle to any value.

The AC-DC converter's load factor is defined as the ratio between the requested average output power of DC-DC voltage converters and the sum of AC-DC-power capability of the plurality of AC-DC-voltage converters. The requested output power is consequently limited by the maximum AC-DC power capability providing the DC-DC-power capability.

As the total AC-DC-power capability of the plurality of AC-DC-voltage converters can be smaller than the total DC-DC-power capability of the plurality of DC-DC-voltage converters, a load factor close, equal or even higher than 1 can be provided. For example, one AC-DC-voltage converter has an AC-DC-power capability of 600 kW and supplies three DC-DC-voltage converters with a DC-DC-power capability of 300 kW each. Assuming the average output power requested to each DC-DC converter is equal to 200 kW, the load factor would be 1. Of course, in such installation, when the instantaneous requested output power is greater than or less than 600 kW, the control device schedules each AC-DC-power injection and the instantaneous maximum capability of each DC-DC-voltage converter (to be communicated to the electric vehicle) based on the managing algorithm.

The term "scheduling the AC-DC-power", as used herein, comprises distributing a power flow inside the DC-bus, setting the instantaneous maximum capability of each DC-DC-voltage converter (to be communicated to the electric vehicle), managing power flows from or to possible batteries connected to the DC bus, controlling a switch matrix configured to switch the connections of DC-DC-voltage converters and all the other actions related to an optimal control of the whole infrastructure.

Preferably, the output power is the amount of DC-DC-power requested by the electric vehicles that request charging by the charging terminals.

Preferably, the electric vehicle charging station comprises a switch matrix configured for distributing the DC-DC converters' power to the respective charging terminals.

Preferably, the DC-DC-voltage converter is an isolated DC-DC-voltage converter.

Preferably, the managing algorithm considers a plurality of input parameters. For example, the managing algorithm considers that the AC-DC voltage converters' total capability could be less than the DC-DC nominal output power. Further, the managing algorithm preferably considers an auxiliary device, or in other words a charging infrastructure, and thus that the total sum of AC-DC-power, and storage power could be less than the DC-DC converter's maximum power. Further, the managing algorithm preferably considers a price of energy adsorbed from the electric vehicle charging station could vary with time. Further, the managing algorithm preferably considers that an electric vehicle charging station operator should pay tariffs variable with time for the energy injected into the grid. Further, the managing algorithm preferably considers that the electric vehicles under charge is asked to pay a price for energy unit dependent on the required power, and thus, on the time needed for a charging session. The managing algorithm further considers an efficiency of converters and transmission cables as a function of the delivered power. The managing algorithm further considers that each auxiliary device charging/discharging cycle, in particular battery charging/discharging cycle, reduces the auxiliary device life, and can therefore be seen as a maintenance cost. The managing algorithm further considers that a usage level of each converter determines its aging, and for a proper network management a common aging of all components is preferred. The managing algorithm further considers that an AC-DC-power capability, and an auxiliary-power capability, like a battery-power capability or a and renewable-energy-device capability could vary with time due to aging, maintenance, faults, weather conditions and/or batteries SoC level.

Preferably, the managing algorithm depends on potential earnings. For example, in a scenario where buying energy to charge the battery is very cheap, even in case the electric vehicle would require all the AC-DC power, it could be convenient to allocate just a portion of AC-DC capability to charge the electric vehicle, thereby selling them energy at a lower price than if full power was provided to them, using the remaining AC-DC capability to recharge the batteries.

Preferably, in a simple implementation, the managing algorithm would distribute the AD-DC-power in line with First Come First Serve. Thus, the charging terminal, which requests the output power first, will be served first with all the available power from the DC-bus. If there is no power left to distribute on the DC-bus, the control device signals the charging terminal that the electric vehicle has to wait until power is available again.

Preferably, for each DC-bus a sum of the DC-DC-capabilities of the plurality of DC-DC-voltage converters connected to the specific DC-bus is equal or higher than a sum of the AC-DC-power capabilities of the plurality of AC-DC-voltage converters connected to the specific DC-bus.

Preferably, each charging terminal is configured to request its demand for DC-DC-power and thus consequently, for AC-DC-power from the DC-bus, from the control device. Preferably, the electric power source comprises a low voltage grid or a medium voltage substation.

Preferably, the at least one DC-bus electrically connects the plurality of AC-DC-voltage converters with the plurality of DC-DC-voltage converters.

The DC-bus is a common DC connection that decouples the AC-DC-voltage converters from the DC-DC-voltage converters. In other words, the DC-bus is an electrical node to which all AC-DC converters and DC-DC converters are connected to.

Thus, a split design is provided, splitting the AC-DC-voltage converters from the DC-DC-voltage converters by the DC-bus.

The total AC-DC-power relates to a maximal power the AC-DC-voltage converters are able to provide. The total DC-DC-power relates to a maximal power the DC-DC-voltage converters are able to provide.

Consequently, an electric vehicle charging station is provided, which dynamically controls the AD-DC-power to the DC-DC-voltage converters. This allows reducing the complexity and the size of the AC-DC-voltage converter side, wherein the sum of the DC-DC-capabilities of the plurality of DC-DC-voltage converters is equal or higher than the sum of the AC-DC-power capabilities of the plurality of AC-DC-voltage converters.

Thus, an improved electric vehicle charging station with improved load factor is provided.

In a preferred variant of the invention, the control device is configured for determining the AC-DC-power capability of the plurality of AC-DC-voltage converters in real-time.
This allows the control device to run the managing algorithm in real-time and provide a real-time scheduling of the AC-DC-power.

Thus, an improved electric vehicle charging station with improved load factor is provided.

In a preferred variant of the invention, the control device comprises fiber optics, a Can Bus, a serial RS485 or a wireless communication, in particular a 5G network for low latency communication.

In a preferred variant of the invention, the electric vehicle charging station comprises at least one auxiliary device, electrically connected to the DC-bus, comprising an auxiliary-power capability relating to a possible auxiliary-power provided by the auxiliary device. The communication channel connects the auxiliary device with the control device. The control device is configured for determining the auxiliary-power capability over the communication channel. The managing algorithm uses the determined auxiliary-power capability.

With an increased auxiliary-power capability, the load factor of the electric vehicle charging station can be lowered.

Also, the at least one auxiliary device increases the flexibility of scheduling the AD-DC-power together with the auxiliary-power to the DC-DC-voltage converters.

Thus, an improved electric vehicle charging station with improved load factor is provided.

In a preferred variant of the invention, a sum of the DC-DC-capabilities of the plurality of DC-DC-voltage converters is equal or higher than a sum of the AC-DC-power capabilities of the plurality of AC-DC-voltage converters and a sum of the auxiliary-power capability of the at least one auxiliary device.

Thus, an improved electric vehicle charging station with improved load factor is provided.

In a preferred variant of the invention, the at least one auxiliary device comprises a renewable-energy-device, wherein the renewable-energy-device is configured for being charged by converting energy and/or configured for electrically supplying the DC bus.

The renewable-energy-device preferably comprises a photovoltaic device or a wind power device. The renewable-energy-device preferably is located in the proximity of the electric vehicle charging station. Further preferably, the renewable-energy-device is integrated into the electric vehicle charging station. Alternatively, the renewable-energy-device is located distant to the electric vehicle charging station and connected to the electric vehicle charging station by an auxiliary device interface, connecting the auxiliary device to the DC-bus.

Thus, an improved electric vehicle charging station with improved load factor is provided.

In a preferred variant of the invention, the at least one auxiliary device comprises a battery-device, wherein the battery-device is configured for being charged by the AC-DC-voltage converters and/or configured for electrically supplying the DC bus.

The battery-device preferably is located in the proximity of the vehicle charging station or integrated into the vehicle charging station.

The battery-device is configured to store electrical power. In other words, the battery-device functions as a buffer for the DC-bus.

Preferably, the managing algorithm is used to schedule charging and discharging of the battery-device.

Thus, an improved electric vehicle charging station with improved load factor is provided.

In a preferred variant of the invention, the auxiliary device is directly connected to the DC-bus.

Alternatively, the auxiliary device is equipped with an additional, not isolated, DC-DC converter in case the bus voltage range does not match with the battery operational range.

Thus, an improved electric vehicle charging station with improved load factor is provided.

In a preferred variant of the invention, a ratio between the sum of AC-DC-power capabilities and DC-DC-capabilities is smaller than 1, preferably smaller than 0,5, further preferably smaller than 0,3.

In other words, the ratio between a nominal AC-DC converters' total output power and a nominal DC-DC converters' total output power is smaller than 1, preferably smaller than 0,5, further preferably smaller than 0,3.

Preferably, a range of supported ratios between the nominal AC-DC converters' total output power and the nominal DC-DC converters' total output power of the electric vehicle charging station is tailored to the application of the electric vehicle charging station. A ratio above 0,75 does not provide enough benefit compared to an uncontrolled electric vehicle charging station with a ratio of 1. A bottom end of the ratio lies in the magnitude of 0,2. Such a ratio is generally only be possible with a relatively big auxiliary device. However, the costs of the electric vehicle charger station increase with an increasing size of the auxiliary device. Consequently, dependent on the application of the electric vehicle charging station, the load factor of the electric vehicle charging station is tailored based on cost-effectiveness reasons.

Thus, an improved electric vehicle charging station with improved load factor is provided.

In a preferred variant of the invention, the communication channel comprises a first communication channel section, connecting the AC-DC voltage converters and/or the auxiliary device with the control device, and a second communication channel section, connecting the DC-DC-voltage converters with the control device.

In other words, the communication channel preferably comprises only one communication channel section, connecting the plurality of AC-DC-voltage converters and the plurality of DC-DC-voltage converters as well as the at least one auxiliary device, if present.

Alternatively, the communication channel comprises a plurality of communication channel sections, splitting the communication channel, which is also called communication network, in several sections. Each of the plurality of communication channel sections are preferably connected with each other, for example over a communication hub. Further, each communication channel section is configured for determining a power capability of the respective converter or auxiliary device. Splitting the communication channel into several sections allows deciding for each communication channel section, if all internal communication of the respective communication channel section is necessary for the communication channel, in particular the control device. Consequently, unnecessary internal communication of a communication channel section is not forwarded to the communication hub and thus the control device. Thus, communication overhead can be reduced. For example, it can be determined by the control device that all communication not relating to the power capability of the respective converters or auxiliary devices should not be send to the communication hub.

Thus, an improved electric vehicle charging station with improved load factor is provided.

In a preferred variant of the invention, the managing algorithm is based on an energy price, maintenance costs of components of the electric vehicle charging station and/or a time of the day.

In a preferred variant of the invention, the electric vehicle charging station comprises an external control device, being configured for controlling an amount of provided electrical power to the electric vehicle charging station by the electrical power source.

In other words, the external control device operates due to an input from an electrical grid operator, an owner of the electric vehicle charging station or a status of the electric vehicle charging station.

In a further preferred embodiment, the external control device is connected to the control device. Thus, the external control device is configured for providing external control input to the control device, wherein the managing algorithm uses the external control input. For example, the external control input requests the managing algorithm to charge a vehicle only with AC-DC-power at night and keep the auxiliary device fully loaded to be at full capacity during the day, where more output power is expected to be requested.

In a preferred variant of the invention, the external control device comprises a supervisory control and data acquisition, SCADA.

A SCADA is a central control system for a plurality of systems. In this case, the SCADA is a central control system for controlling a plurality of electric vehicle charging stations.

In a preferred variant of the invention, the external control device is connected with the plurality of AC-DC-voltage converters, controlling the amount of provided electrical power for each AC-DC-voltage converter.

According to the invention, a method for controlling an electric vehicle charging station, as described herein, comprises the following steps: determining the AC-DC-power capability of the plurality of AC-DC-voltage converters and an output power, requested by the plurality of charging terminals. Scheduling the AC-DC-power of the plurality of AC-DC-voltage converters to the plurality of DC-DC-voltage converters based on a managing algorithm, wherein the managing algorithm uses the determined AC-DC-power capability and the requested output power.

The method preferably is a computer-implemented method.

The present invention also relates to a computer program product including computer program code for controlling one or more processors of a device adapted to be connected to a communication network and/or configured to store a standardized configuration representation, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
- Fig.1: schematically shows an electric vehicle charging station in accordance with a first embodiment;
- Fig.2: schematically shows an electric vehicle charging station in accordance with a second embodiment; and
- Fig.3: schematically shows an electric vehicle charging station in accordance with a third embodiment.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Same symbols in the figures relate the same reference signs in figures.

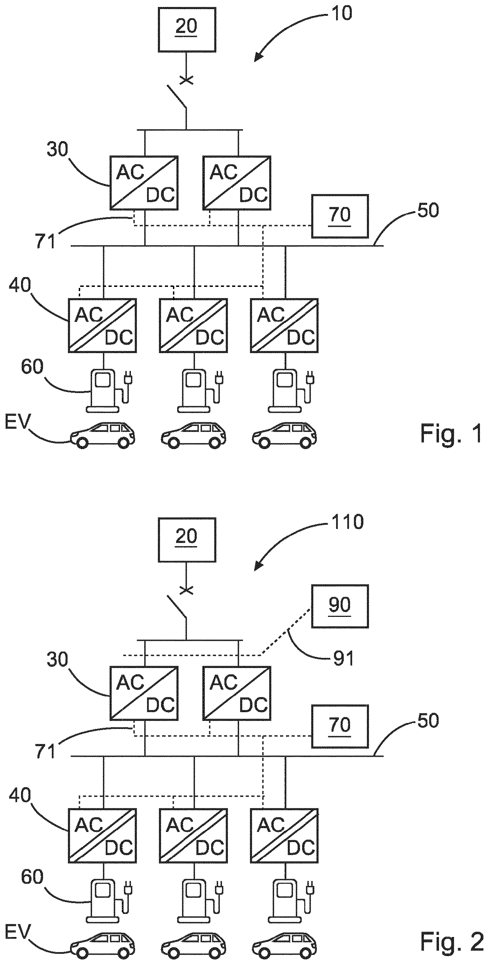

Fig.1 shows an electrical vehicle charging station 10 according to a first embodiment. The electric vehicle charging station 10 comprises an electric power interface 20, configured for receiving electrical power from an electric power source. The electric power source, in this case, is a low voltage grid. The electrical vehicle charging station 10 comprises two AC-DC-voltage converters 30, electrically supplied by the electric power source 20, wherein each AC-DC-voltage converter 30 comprises an AC-DC-power capability relating to a maximal possible AC-DC-power provided by the AC-DC-voltage converter 30. The electric vehicle charging station 10 comprises three DC-DC-voltage converters 40, electrically supplied by the two AC-DC-voltage converters 30 over a DC-bus 50. Each DC-DC-voltage converter 40 comprises a DC-DC-power capability relating a possible DC-DC-power provided by the DC-DC-voltage converter 40. The electrical charging station 10 comprises three charging terminals 60, configured for charging an electric vehicle EV, wherein each of the three DC-DC-voltage converters 40 provides electric power to a specific charging terminal 60.

In this case, each AC-DC-voltage converter 30 has a AC-DC-power capability of 300 kiloWatt and each DC-DC-voltage converter 40 has a DC-DC-power capability of 300 kiloWatt. Thus, the AC-DC-voltage converters 30 can supply the DC-bus 50 with an AC-DC-power capability of 600 kiloWatt. On the other hand, when all three DC-DC-voltage converters 40 work at full capacity, the DC-DC-voltage converters 40 request a power of 900 kilowatt from the AD-DC-voltage converters 30, which cannot be provided.

Consequently, the AC-DC-power has to be scheduled. Thus, the electric vehicle charging station 10 comprises a control device 70, configured for scheduling the AC-DC-power of the AC-DC-voltage converters 30 to the DC-DC-voltage converters 40 based on a managing algorithm. The managing algorithm distributes the available AC-DC-power to the DC-DC-voltage converters 40 and thus to the electric vehicles EV. Therefore, the control device 70 needs to be aware of the available AC-DC-power, or in other words the AC-DC-capability of the AC-DC-voltage converters 30 and how much DC-DC-power is requested from the electric vehicles EV that want to be charged.

Thus, the electric vehicle charging station 10 comprises a communication channel 71, connecting the two AC-DC-voltage converters 30 and the three DC-DC-voltage converters 40 with the control device 70. Thus, the control device 70 is able to determine the AC-DC-power capability of the two AC-DC-voltage converters 30 and an output power, which is the DC-DC-power requested by the three charging terminals 60, over the communication channel 71.

As describes, a sum of the DC-DC-capabilities of the plurality of DC-DC-voltage converters 40 is higher than a sum of the AC-DC-power capabilities of the plurality of AC-DC-voltage converters 30. Thus, when, like in the described case, three electric vehicles EV request charging at full capacity, the managing algorithm executed by the control device 70 uses the determined AC-DC-power capability and the requested output power to schedule the AC-DC-power to the DC-DC-voltage converters 40. As simple solutions, the managing algorithm executes a First Come First Serve algorithm, wherein the two of the three electric vehicles EV are distributed with power from the DC-bus, which requested their power first. The third electric vehicle thus has to wait until one of the other two electric vehicles EV is done charging. Alternatively, the managing algorithm executes an even distribution algorithm, distributing 200kW of power to each DC-DC-power converter. Thus, all three electric vehicles EV are able to perform charging, however none of them at full capacity.

Fig.2 shows an electrical vehicle charging station 110 according to a second embodiment.

Compared to the electrical vehicle charging station 10 of fig. 1 the electrical vehicle charging station of fig. 2 comprises an external control device 90, being configured for controlling an amount of provided electrical power to the electric vehicle charging station 110 by the electrical power source 20.

In this case, the external control device 90 comprises a supervisory control and data acquisition, SCADA. The external control device 90 in this case allows an external grid operator to adjust the available electrical power for the electric vehicle charging station 110.

For example, the low voltage grid supplying the vehicle charging station 110 needs to be relieved. Thus, the external control device 90 controls the AC-DC-voltage converters to operate at a reduced capability. For example, it is determined that each AC-DC-voltage converters only operates at 200 kiloWatt instead of the structural possible 300 kiloWatt. Consequently, the DC-bus can only distribute 200 kiloWatt from each AC-DC-voltage converter, summing up to 400 kiloWatt. That 400 kiloWatt amount of energy is then scheduled by the control device 70 to the three DC-DC-voltage converters. For example, each DC-DC-voltage converter 40 is supplied with 133 kiloWatt. Thus all three electric vehicles EV can charge, however at a reduced capacity.

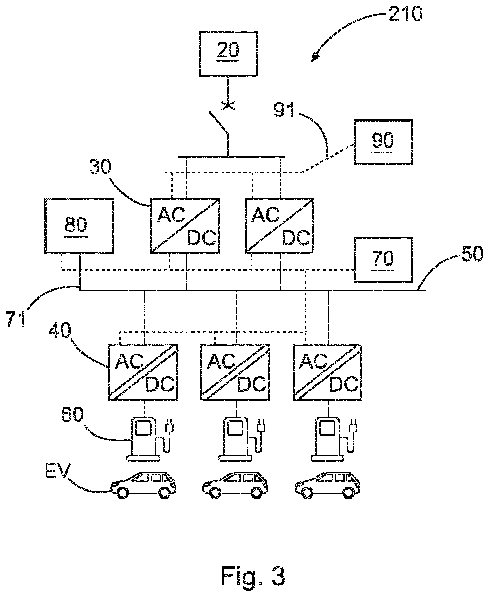

Fig.3 shows an electrical vehicle charging station 210 according to a third embodiment.

Compared to the electrical vehicle charging stations described above, the electrical vehicle charging station 210 of fig. 2 comprises an auxiliary device 80, electrically connected to the DC-bus 50, comprising an auxiliary-power capability relating a possible auxiliary-power provided by the auxiliary device 80. In this case, the auxiliary device 80 is a storage device in form of a battery device.

The communication channel 71 connects the auxiliary device 80 with the control device 70. The control device 70 is configured for determining the auxiliary-power capability over the communication channel 71.

The battery device allows the vehicle charging station 210 to operate in a more flexible way. As has been described before, the requested output power of 900 kiloWatt cannot be supplied by the 600 kiloWatt of the two AC-DC-voltage converters 30. However, the Dc-bus in this embodiment is also supplied with the battery device 80. The managing algorithm of the control device 80 thus also uses the determined auxiliary-power capability of the battery device 80. In this case, the battery device 80 provides an auxiliary power capability of 300 kiloWatt. Thus the battery device 80 and the AC-DC-converters 30 provide enough electrical power to supply all three electric vehicles EV. However, charging and discharging the battery device 80 comes with relatively high maintenance costs. Those maintenance costs in this case are also a parameter considered by the managing algorithm. In a scenario, where two electric vehicles EV are charged with the power provided by the two AC-DC-converters, for example in a First Come First Serve scenario, the third electric vehicle EV requests electrical power that cannot be supplied by the AC-DC-voltage converters 30. The control device 70 detects that the battery device 80 has enough auxiliary-power capability to charge the third electric vehicle EV at full capacity. However, due to the increased maintenance costs, the control device 70 determines by using the managing algorithm that the operator of the third electric vehicle EV is offered with two options. In a first option, the third electric vehicle EV has to wait until one of the first two electric vehicles is done charging. Then the third electric vehicle EV can be supplied with electric power in accordance with a usual price per power unit. As a second option, the third electric vehicle EV can decide to be directly charged at a higher price per power unit, covering the additional maintenance costs, loading from the battery device 80 causes.

Preferably, the functional modules and/or the configuration mechanisms are implemented as programmed software modules or procedures, respectively; however, one skilled in the art will understand that the functional modules and/or the configuration mechanisms can be implemented fully or partially in hardware.

### LIST OF REFERENCE SYMBOLS

- 10: electric vehicle charging station
- 20: electric power interface
- 30: AC-DC-voltage converter
- 40: DC-DC-voltage converter
- 50: DC-bus
- 60: charging terminal
- 70: control device
- 71: communication channel
- 80: auxiliary device
- 90: external control device
- 91: external communication channel
- EV: electric vehicle
- 110: electric vehicle charging station
- 210: electric vehicle charging station

## Claims

1. An electric vehicle charging station (10), comprising
an electric power interface (20), configured for receiving electrical power from an electric power source;
a plurality of AC-DC-voltage converters (30), electrically supplied by the electric power source (20); wherein each AC-DC-voltage converter (30) comprises an AC-DC-power capability relating to a maximal possible AC-DC-power provided by the AC-DC-voltage converter (30);
a plurality of DC-DC-voltage converters (40), electrically supplied by the plurality of AC-DC-voltage converters (30) over at least one DC-bus (50); wherein each DC-DC-voltage converter (40) comprises a DC-DC-power capability relating a possible DC-DC-power provided by the DC-DC-voltage converter (40);
a plurality of charging terminals (60), configured for charging an electric vehicle (EV); wherein each DC-DC-voltage converter (40) provides electric power to one charging terminal (60);
a control device (70), configured for scheduling the AC-DC-power of the plurality of AC-DC-voltage converters (30) to the plurality of DC-DC-voltage converters (40) based on a managing algorithm;
a communication channel (71), connecting the plurality of AC-DC-voltage converters (30) and the plurality of DC-DC-voltage converters (40) with the control device (70);
wherein a sum of the DC-DC-capabilities of the plurality of DC-DC-voltage converters (40) is equal or higher than a sum of the AC-DC-power capabilities of the plurality of AC-DC-voltage converters (30);
wherein the control device (70) is configured for determining the AC-DC-power capability of the plurality of AC-DC-voltage converters (30) and an output power, requested by the plurality of charging terminals (60) over the communication channel (71); and
wherein the managing algorithm uses the determined AC-DC-power capability and the requested output power.

2. The electric vehicle charging station of claim 1,
wherein the control device (70) is configured for determining the AC-DC-power capability of the plurality of AC-DC-voltage converters (30) in real-time.

3. The electric vehicle charging station of any of claims 1 or 2,
wherein the communication channel (71) comprises fiber optics, a Can Bus, a serial RS485 or a wireless communication, in particular a 5G network for low latency communication.

4. The electric vehicle charging station of any of the preceding claims, comprising:
at least one auxiliary device (80), electrically connected to the at least one DC-bus (50), comprising a auxiliary-power capability relating a possible auxiliary-power provided by the auxiliary device (80);
wherein the communication channel (71) connects the auxiliary device (80) with the control device (70);
wherein the control device (70) is configured for determining the auxiliary-power capability over the communication channel (71); and
wherein the managing algorithm uses the determined auxiliary-power capability.

5. The electric vehicle charging station of claim 4,
wherein a sum of the DC-DC-capabilities of the plurality of DC-DC-voltage converters (40) is equal or higher than a sum of the AC-DC-power capabilities of the plurality of AC-DC-voltage converters (30) and a sum of the auxiliary-power capability of the at least one auxiliary device (80).

6. The electric vehicle charging station of any of the claims 4 or 5,
wherein the at least one auxiliary device (80) comprises a renewable-energy-device; wherein the renewable-energy-device is configured for being charged by converting energy and/or configured for electrically supplying the DC-bus (50).

7. The electric vehicle charging station of any of claims 5 to 6,
wherein the at least one auxiliary device (80) comprises a battery-device; wherein the battery-device is configured for being charged by the AC-DC-voltage converters (30) and/or configured for electrically supplying the DC-bus (50).

8. The electric vehicle charging station of any of the claims 5 to 7,
wherein the auxiliary device (80) is directly connected to the DC-bus (50).

9. The electric vehicle charging station of any of the preceding claims,
a ratio between the sum of AC-DC-power capabilities and DC-DC-capabilities is smaller than 1, preferably smaller than 0,5, further preferably smaller than 0,3.

10. The electric vehicle charging station of any of the preceding claims,
wherein the communication channel (71) comprises a fist communication channel section, connecting the AC-DC voltage converters (30) and/or the auxiliary device (80) with the control device (70), and a second communication channel section, connecting the DC-DC-voltage converters (40) with the control device (70).

11. The electric vehicle charging station of any of the preceding claims,
wherein the managing algorithm is based on an energy price, maintenance costs of components of the electric vehicle charger station and/or a time of the day.

12. The electric vehicle charging station of any of the preceding claims, comprising:
an external control device (90), being configured for controlling an amount of provided electrical power to the electric vehicle charging station (10) by the electrical power source (20).

13. The electric vehicle charging station of claim 12,
wherein the external control device (90) comprises a supervisory control and data acquisition, SCADA.

14. The electric vehicle charging station of any of the claims 12 or 13,
wherein the external control device (90) is connected with the plurality of AC-DC-voltage converters (30) by an external communication channel (91), controlling the amount of provided electrical power from the electric power source (20) for each AC-DC-voltage converter (30).

15. Method for operating an electric vehicle charging station (10) of any of the claims 1-14, comprising the steps:
determining the AC-DC-power capability of the plurality of AC-DC-voltage converters (30) and an output power, requested by the plurality of charging terminals (60); and
scheduling the AC-DC-power of the plurality of AC-DC-voltage converters (30) to the plurality of DC-DC-voltage converters (40) based on a managing algorithm, wherein the managing algorithm uses the determined AC-DC-power capability and the requested output power.
